Europäisches Patentamt

European Patent Office

Office européen des brevets

(11) Veröffentlichungsnummer: **0 353 484**
**A1**

(19)

(12) **EUROPÄISCHE PATENTANMELDUNG**

(21) Anmeldenummer: 89112303.6

(22) Anmeldetag: 06.07.89

(51) Int. Cl.⁴: **C08L 77/00 , C08L 25/16**

(30) Priorität: 19.07.88 DE 3824455

(43) Veröffentlichungstag der Anmeldung:
07.02.90 Patentblatt 90/06

(84) Benannte Vertragsstaaten:
DE FR GB IT

(71) Anmelder: **BAYER AG**

**D-5090 Leverkusen 1 Bayerwerk(DE)**

(72) Erfinder: **Westeppe, Uwe, Dr.**
**Vogelskamp 72**
**D-4020 Mettmann(DE)**
Erfinder: **Jansen, Ulrich, Dr.**
**Stürzelberger Strasse 50**
**D-4047 Dormagen 5(DE)**

(54) **Thermoplastische Formmassen aus Polyamiden und Harzcopolymeren mit (Meth)Acrylamid, Verfahren zu ihrer Herstellung und ihre Verwendung.**

(57) Die Erfindung betrifft neue thermoplastische Formmassen aus teilkristallinen und/oder amorphen Polyamiden A) und thermoplastischen Harzcopolymeren B), die neben α-Methylstyrol und (Meth)Acrylnitril wenigstens ein copolymerisiertes (Meth)Acrylsäureamid enthalten, sowie gegebenenfalls zusätzlich ein Kautschukpolymerisat C) in Mengen bis 35 Gew.-% enthalten können.

Erfindungsgegenstand ist auch ein Verfahren zur Herstellung der neuen Formmassen und ihre Verwendung durch thermoplastische Verarbeitung zu Formkörpern.

EP 0 353 484 A1

## Thermoplastische Formmassen aus Polyamiden und Harzcopolymeren mit (Meth)Acrylamid, Verfahren zu ihrer Herstellung und ihre Verwendung

Die Erfindung betrifft neue thermoplastische Formmassen aus teilkristallinen und/oder amorphen Polyamiden A) und thermoplastischen Harzcopolymeren B), die neben α-Methylstyrol und (Meth)Acrylnitril wenigstens ein copolymerisiertes (Meth)Acrylsäureamid enthalten, sowie gegebenenfalls zusätzlich ein Kautschukpolymerisat C) in Mengen bis 35 Gew.-% enthalten können.

Erfindungsgegenstand ist auch ein Verfahren zur Herstellung der neuen Formmassen und ihre Verwendung durch thermoplastische Verarbeitung zu Formkörpern.

Polyamide werden aufgrund ihrer guten Abrieb- und Chemikalienbeständigkeit sowie hoher Zähigkeit, die sich durch Kautschukmodifizierung noch erheblich steigern läßt, als Werkstoff für Formteile mit hohen Anforderungen genutzt. Nachteilig sind die Wasseraufnahme und damit einhergehende Steifigkeitsverluste.

Thermoplastische Harzpolymere aus den Monomeren (substituierte) Styrol(e), Acrylnitril und (Meth)-Acrylsäureamid zeigen eine gute Dimensionsstabilität. Die Wärmeformbeständigkeit und Chemikalienresistenz sind dagegen verbesserungswürdig.

Aus der DE-OS 3 120 803 sind Formmassen aus Polyamiden, Pfropfmischpolymerisaten und Olefincopolymeren, die einen (hohen) Anteil an sauren Gruppen aufweisen, bekannt. Die Schlagzähigkeit wird verbessert.

EP-A 0 049 103 beschreibt Polymere aus einem Polyamid und Vinylcopolymerisaten, die Ester und ein Imid einer α,ß-ungesättigten Dicarbonsäure enthalten und u.a. hohe Dimensionsstabilität und Chemikalien-, Hitze- und Abriebsbeständigkeit aufweisen.

Aus der US-A 4 496 690 sind Mischungen aus Polyamid, Pfropfpolymerisaten und einem Terpolymerisat aus Styrol, Acrylnitril und einem ungesättigten Carbonsäureamid bekannt, die verbesserte Mischbarkeit, Wärmeformbeständigkeit und Kerbschlagzähigkeit aufweisen. Es werden bevorzugt Polymerisate auf Basis Styrol beansprucht. Die Beispiele beziehen sich nur auf Pfropfpolymere, die zur Schlagzähmodifizierung von Polyamiden eingesetzt werden.

Die DE-A 2 043 889 lehrt, daß Mischungen aus amorphen Polyamiden und schlagzähmodifizierten Styrolcopolymerisaten mit Acrylsäurederivaten gute mechanische Eigen schaften aufweisen. Bevorzugte Acrylsäurederivate sind Acrylnitril sowie Ester primärer und sekundärer Alkohole.

Wärmeformbeständige, α-Methylstyrol/Acrylnitril-(AMS/ACN)-Copolymerisate enthaltende ABS-Formmassen sind bekannt (vgl. US-PS 3 010 936, DE-OS 3 594 453).

Es zeigt sich jedoch, daß diese Formmassen nur mäßige Eigenschaften aufweisen; insbesondere ist die erzielbare Wärmeformbeständigkeit und Verarbeitungsbreite für viele Anwendungen nicht ausreichend.

In EP-A 42 572 wurde vorgeschlagen, den Anteil des α-Methylstyrols im Polymerisat so groß wie nur möglich zu machen. Dies führt zu einer Verbesserung der Wärmeformbeständigkeit; jedoch ist die Thermostabilität bei hohen Temperaturen, d.h. bei der Verarbeitung reduziert.

Der US-PS 4 659 790 ist zu entnehmen, daß die Thermostabilität und Wärmeformbeständigkeit von α-Methylstyrol/Acrylnitril-Copolymerisaten verbessert werden kann, wenn die Copolymerisate eine bestimmte α-Methylstyrol-Sequenzlängen-Verteilung aufweisen; insbesondere soll der Anteil an α-Methylstyrol-Triaden nicht über 15 Gew.-% des Polymerisats ausmachen.

Bestimmte Copolymerisate aus α-Methylstyrol (AMS), Acrylnitril (ACN) mit Methacrylamid (MAA) sind durch Lösungspolymerisation hergestellt worden (Chem. pap. 41 (1), 119-124 (1987)). Eine technische Herstellung ist auf diesem Weg allerdings nicht sinnvoll möglich.

Die bekannten Verfahren zur Herstellung von α-Methylstyrol-Polymerlatices liefern jedoch nur Latices mit einer geringen Stabilität gegen Scherung, so daß ihre wirtschaftliche Herstellung und Handhabung schwierig ist.

Wärmeformbeständigere, thermostabile α-Methylstyrol/Acrylnitril-Acrylamid-Terpolymerisate sind nun nach der eigenen, nicht vorveröffentlichten deutschen Patentanmeldung P 38 06 074.4 zugänglich. Dies ist besonders vorteilhaft, weil hochwärmeformbeständige AMS-Polymerisat-Latices hergestellt werden können, die einen deutlich höheren Polymerisatgehalt aufweisen und damit auch eine wirtschaftlichere Herstellung des Copolymerisats durch Verbesserung der Raum/Zeit-Ausbeute möglich wird. Man kann auch danach stabile AMS-Copolymerisate mit deutlich geringeren Mengen an Polymerisationshilfsstoffen, z.B. Emulgatoren, herstellen, ohne daß ihre Stabilität zu gering wird.

Die technische Aufgabe besteht nun darin, Chemikalienbeständigkeit, Bedruckbarkeit und Wärmeformbeständigkeit solcher AMS-Copolymerisate zu verbessern.

Die Aufgabe wird dadurch gelöst, daß Polymermischungen von bestimmten Methylstyrol-Copolymerisaten mit Polyamiden und gegebenenfalls Kautschukpolymerisaten hergestellt werden. Weitere Aufgaben sind der Beschreibung und den Beispielen zu entnehmen.

Gegenstand der Erfindung sind somit thermoplastische Formmassen, enthaltend

A) mindestens 2 Gew.-% eines thermoplastischen, teilkristallinen und/oder amorphen Polyamids;

B) 10 bis 98 Gew.-%, eines durch Emulsionspolymerisation hergestellten Polymerisates aus

B.1) mindestens 49 Gew.-%, bevorzugt 62 bis 85 Gew.-%, besonders bevorzugt 69 bis 85 Gew.-%, α-Methylstyrol,

B.2) 10 bis 50 Gew.-%, bevorzugt 14 bis 37 Gew.-%, besonders bevorzugt 14 bis 30 Gew.-%, Acrylnitril und/oder Methacrylnitril;

B.3) 1 bis 50 Gew.-%, bevorzugt 1 bis 20 Gew.-%, besonders bevorzugt 1 bis 10 Gew.-%, Acrylamid,

C) gegebenenfalls einem, die Schlagzähigkeit der Formmassen erhöhenden Kautschukpolymerisat in Mengen Null bis 35 Gew.-% in der Mischung.

Diese Formmassen können daneben übliche Zusätze wie Stabilisatoren, Pigmente, Farbstoffe, Füllstoffe, Fasern etc. in üblichen Mengen enthalten.


## Polyamide a)

Bevorzugt bestehen die Formmassen aus 5 bis 90 Gew.-% Polyamid A) und 95 bis 5 Gew.-% Harzcopolymer B) in der Gleichung (A + B), sowie gegebenenfalls zusätzlich aus dem Kautschukpolymerisat C) in Mengen von Null bis zu 35 Gew.-% C), bezogen auf die Mischung aus A) + B) + C).

Diese bevorzugten Formmassen enthalten somit mindestens 5 Gew.-% eines Polyamids A), bis zu 95 Gew.-% eines Harzcopolymers B) und 0 bis 35 Gew.-% eines Kautschukpolymerisats C).

Als Polyamid-Komponente A) der erfindungsgemäßen Formmassen eignen sich alle teilkristallinen Polyamide, insbesondere Polyamid-6, Polyamid-6,6 und teilkristalline Copolyamide auf Basis dieser beiden Komponenten. Weiterhin kommen teilkristalline Polyamide in Betracht, deren Säurekomponente insbesondere ganz oder teilweise (neben Adipinsäure bzw. Caprolactam) aus anderen Dicarbonsäuren, vorzugsweise aus Terephthalsäure und/oder Isophthalsäure und/oder Korksäure und/oder Sebacinsäure und/oder Azelainsäure und/oder Adipinsäure und/oder einer Cyclohexandicarbonsäure besteht, und anderen Diaminkomponenten, bevorzugt ganz oder teilweise insbesondere aus m- und/oder p-Xylylendiamin und/oder Hexamethylendiamin und/oder 2,2,4- und/oder 2,4,4-Trimethylhexamethylendiamin und/oder Isophorondiamin, und deren Zusammensetzungen und Herstellung aus dem Stand der Technik bekannt sind.

Außerdem sind teilkristalline Polyamide zu nennen, die ganz oder teilweise aus Lactamen mit 6 bis 12 C-Atomen, gegebenenfalls unter Mitverwendung einer oder mehrerer der obengenannten Ausgangskomponenten, hergestellt werden.

Besonders bevorzugte teilkristalline Polyamide A) sind Polyamid-6 und Polyamid-6,6 oder Copolyamide mit nur geringen Anteilen (bis etwa 10 Gew.-%) der Cokomponenten.

Es können auch als Polyamidkomponente A) amorphe Polyamide eingesetzt werden. Sie werden erhalten durch Polykondensation von Diaminen, beispielsweise Ethylendiamin, Tetramethylendiamin, Hexamethylendiamin, Decamethylendiamin, 2,2,4-und/oder 2,4,4-Trimethylhexamethylendiamin, m- und/oder p-Xylylendiamin, Bis-(4-aminocyclohexyl)-methan oder Gemischen aus 4,4'-, 2,4'- und/oder 2,2'-Diamino-dicyclohexylmethanen, 2,2-Bis-(4-aminocyclohexyl)-propan, 3,3'-Dimethyl-4,4'-diamino-dicyclohexylmethan, 3-Aminomethyl-3,5,5-trimethyl-cyclohexylamin, 2,5-und/oder 2,6-Bis-(aminomethyl)-norbornan und/oder 1,4-Diamino-methylcyclohexan, mit Dicarbonsäuren, beispielsweise Oxalsäure, Adipinsäure, Azelainsäure, Decandicarbonsäure, Heptadecandicarbonsäure, 2,2,4-und/oder 2,4,4-Trimethyladipinsäure, Isophthalsäure oder geringen Mengen an Terephthalsäure. Selbstverständlich sind auch amorphe Copolymere, die durch Polykondensation mehrerer Monomerer erhalten werden, geeignet, ferner solche Copolymere, die unter Zusatz von Aminocarbonsäuren wie ε-Aminocapronsäure, ω-Aminoundecansäure oder ω-Aminolaurinsäure oder ihren Lactamen, hergestellt werden.

Besonders geeignete amorphe Polyamide sind Polyamide, hergestellt aus Isophthalsäure, Hexamethylendiamin und weiteren Diaminen wie 4,4'-Diaminodicyclohexylmethan, Isophorondiamin, 2,2,4-und/oder 2,4,4-Trimethylhexamethylendiamin, 2,5-und/oder 2,6-Bis-(aminomethyl)-norbornan; oder aus Isophthalsäure, 4,4'-Diaminodicyclohexylmethan und ε-Caprolactam; oder aus Isophthalsäure, 3,3'-Dimethyl-4,4'-diamino-dicyclohexylmethan und Laurinlactam; oder aus Terephthalsäure und dem Isomerengemisch aus 2,2,4-und/oder 2,4,4-Trimethylhexamethylendiamin.

Anstelle des reinen 4,4'-Diaminodicyclohexylmethans können auch Gemische der stellungsisomeren Diaminodicyclohexylmethane eingesetzt werden, die sich zusammensetzen aus 70 bis 99 Mol-% des 4,4'-Diaminoisomeren, 1 bis 30 Mol-% des 2,4'-Diaminoisomeren, 0 bis 2 Mol-% des 2,2'-Diaminoisomeren und gegebenenfalls entsprechend höher kondensierten Diaminen, die durch Hydrierung von Diaminodiphenylmethan technischer Qualität erhalten werden. Die Isophthalsäure kann bis zu 30 % durch Terephthalsäure ersetzt sein.

Die Polyamide A) können auch in Form von Gemischen, bevorzugt semikristallinen und amorphen Polyamiden, verwendet werden.

Die Polyamide A) sollen vorzugsweise eine relative Viskosität (gemessen an einer 1 gew.-%igen Lösung in m-Kresol bei 25 °C) von 2,0 bis 5,0, vorzugsweise von 2,5 bis 4,0, aufweisen.

## Harzpolymere B)

Als weitere Komponente enthalten die erfindungsgemäßen thermoplastischen Formmassen wenigstens ein Harzpolymer B), bevorzugt in Mengen von 5 bis 95 Gew.-%, insbesondere 10 bis 85 Gew.-%, ganz besonders bevorzugt 15 bis 80 Gew.-%, bezogen auf die Formmasse aus A) + B).

Das Mischungsverhältnis A) : B) ist in weiten Bereichen frei wählbar und wird im wesentlichen durch die gewünschten Eigenschaften bestimmt. So weisen Mischungen mit >50 % Anteil an Harzcopolymer B) eher die wesentlichen Eigenschaften dieses Polymers auf, einige Eigenschaften sind jedoch verbessert. So ist die Chemikalienbeständigkeit z.B. gegenüber Methanol oder Dekalin (in letzterem sind Harzcopolymere des Typs B) oft nicht beständig) verbessert. Bei Einwirkung von Chemikalien werden die Oberflächen weniger verformt. Des weiteren wird die Spannungsrißbeständigkeit solcher Harze verbessert. Bevorzugte Mischungen mit überwiegendem Harzcopolymeranteil enthalten 5 bis 45 Gew.-%, bevorzugt 10 bis 40 Gew.-%, insbesondere 15 bis 40 Gew.-%, an Polyamid A).

Abmischungen mit einem Polyamidanteil >50 % zeigen polyamidtypische Eigenschaften wie z.B. hohe Abriebfestigkeit und Zähigkeit. Die bei Polyamiden unerwünschte Wasseraufnahme wird durch den Zusatz des Harzes B) verringert, auch werden meistens erhöhte E-Module bestimmt.

Bevorzugte Mischungen mit überwiegendem Polyamidanteil enthalten 5 bis 45 Gew.-%, bevorzugt 10 bis 40 Gew.-%, insbesondere 15 bis 40 Gew.-%, an Harzcopolymer B).

Thermoplastische Harz(ter)polymere B) im Sinne der Erfindung sind Polymere aus

B.1) mindestens 49 Gew.-%, bevorzugt 62 bis 85 Gew.-%, besonders bevorzugt 69 bis 85 Gew.-%, α-Methylstyrol,

B.2) 10 bis 50 Gew.-%, bevorzugt 14 bis 37 Gew.-%, besonders bevorzugt 14 bis 30 Gew.-%, Acrylnitril,

B.3) 1 bis 50 Gew.-%, bevorzugt 1 bis 20 Gew.-%, besonders bevorzugt 1 bis 10 Gew.-%, Acrylamid.

Die Komponente B) kann durch an sich bekannte Emulsionspolymerisation hergestellt werden, insbesondere nach dem Verfahren der noch nicht veröffentlichten deutschen Patentanmeldung P 38 06 074.4. Dabei ist das Zulauf- und das Batch-Zulauf-Verfahren bei Temperaturen von 50 bis 90 °C bevorzugt.

Als Emulgatoren können bekannte, vorzugsweise anionische Tenside eingesetzt werden; z.B. Na- oder K-Salze der disproportionierten Abietinsäure oder höhere Fettsäuren und Alkalisalze von Alkyl- und Alkylarylsulfonsäuren sowie Alkylarylcarbonsäuren. Auch organische Sulfate sind geeignet. Auch nicht-ionische Emulgatoren, z.B. Polyethylenoxidalkylether oder Kombinationen mehrerer Emulgatoren können verwendet werden.

Als Initiatoren können wasserlösliche organische Peroxide, Azoverbindungen, Alkalipersulfate und -perphosphate eingesetzt werden; bei Polymerisationstemperaturen unter 60 °C sind Redoxsysteme auf Basis organischer Peroxide und wasserlöslicher Reduktionsmittel besonders geeignet. Beispiele für Initiatoren sind Kalium- und Ammoniumpersulfat und als Redoxsysteme Cumolhydroperoxid/Fe$^{++}$/Rongalit; p-Menthanhydroperoxid/Fe$^{++}$/Rongalit; Diisopropylbenzolhydroperoxid/Fe$^{++}$/Ascorbinsäure.

Als Regler zur Einstellung der Molekulargewichte der Polymerisate kann man organische Schwefelverbindungen, wie Mercaptane und Disulfide verwenden, wobei langkettige Mercaptane, z.B. n- und tert.-Dodecylmercaptan bevorzugt sind. Die Regler werden zweckmäßig im Monomergemisch gelöst.

Emulgatoren, Initiatoren und Regler können auch in der wäßrigen Flotte vorgelegt oder separat während der Polymerisation kontinuierlich oder diskontinuierlich zugegeben werden.

Nach beendeter Polymerisation wird der erhaltene Copolymerisatlatex, gegebenenfalls nach Mischen mit weiteren Polymerisat-Latices und/oder nach Zusatz von Zuschlagstoffen auf bekannte Weise koaguliert (z.B. durch Zusatz von Mineralsäure und/oder Salz) und gewaschen. Das Copolymerisat kann im Vakuum bei 110 bis 150 °C zum Pulver getrocknet oder vorzugsweise durch Entgasung der Polymerschmelze auf einem Extruder getrocknet werden.

Um Formmassen mit guter Wärmeformbeständigkeit zu erhalten, ist es erforderlich, den Anteil an flüchtigen Bestandteilen (Wasser, Restmonomeren) auf weniger als 4.000 ppm, vorzugsweise auf weniger als 2.000 ppm, zu reduzieren.

Kautschuk-Komponente C)

Gegebenenfalls als weitere Komponente können die erfindungsgemäßen Formmassen als Komponente C) ein die Schlagzähigkeit der Formmassen erhöhendes Kautschukpolymerisat enthalten. Eine Mitverwendung der Komponente C) ist insbesondere dann vorteilhaft, wenn die Formmassen eine gute Tieftemperaturzähigkeit aufweisen sollen. Bevorzugte Formmassen enthalten Null bis zu 35, z.B. 1 bis 35, insbesondere 10 bis 30 Gew.-% der Komponente C), bezogen auf die Summe A) + B) + C). Die Komponente C) stellt ein Kautschukpolymerisat dar und enthält oder ist ein Kautschukpolymerisat mit Einfriertemperaturen (Glastemperaturen) kleiner 0°C, insbesondere kleiner -20°C. Es kann aus der Reihe der Homo-, Co- oder Pfropf-Polymerisate auf der Basis von Dienmonomer-, Olefin- oder Acrylatkautschuken ausgewählt werden, die unvernetzt, insbesondere teilvernetzt oder hochvernetzt sein können. Die Komponente C) ist aus den an sich bekannten Kautschukpolymerisaten auszuwählen, die zur Verbesserung der Eigenschaften, insbesondere zur Schlagzähverbesserung von thermoplastischen Polyamiden, üblicherweise verwendet werden.

Typische Vertreter dieser Klasse sind z.B: Olefinkautschuke, beispielsweise Dienkautschuke sowie auch Ethylen-Propylen-Copolymerisate, die gegebenenfalls noch geringe Mengen unkonjugierter Dienmonomere eingebaut enthalten können (sogenannte EPDM-Kautschuke), sowie vor allem Dienmonomer/Acrylnitril/Copolymerkautschuke, Dienpolymer/Vinylarylpolymer-Blockpolymere wie Styrol/Butadien-Blockcopolymere.

Weiterhin geeignete Komponenten C) können Kautschuke mit sauren Gruppen, z.B. Olefinkautschuke mit sauren Gruppen, sein. Vorteilhafter kann besonders jedoch der Einsatz von Carboxylgruppen enthaltenden Terpolymerisaten aus Ethylen, (Meth)acrylsäure sowie Butylacrylat sein. Die sauren Gruppen können ganz oder teilweise in Form ihrer Salze vorliegen.

Erfindungsgemäß als Komponente C) geeignet können auch kautschukartige Copolymerisate aus Ethylen-Vinylacetat-und Ethylen-(Meth)acrylsäurealkylester-Copolymeren sein. Geeignet als Komponente C) sind auch die in der GB-PS 1 284 489 beschriebenen Ethylencopolymeren mit Aminoacrylatmonomeren. Weiterhin lassen sich auch Interpolymere aus Olefinen, Acrylaten und säurefunktionellen oder latent säurefunktionellen Monomeren wie z.B. (Meth)acrylsäure oder Maleinsäureanhydrid verwenden.

Besonders geeignete Komponenten C) im Sinne der Erfindung sind kautschukartige Pfropfpolymerisate, beispiels weise Pfropfpolymerisate aus α-Olefin-Polymerisaten und Carbonsäure- und/oder Ester-Pfropfmonomeren, wobei als Pfropfgrundlagen Copolymere oder Homopolymere aus z.B. Ethylen, Propylen und Buten(1) geeignet sind. Geeignete Pfropfpolymerisate sind auch die aus den Patentanmeldungen DE-A 2 622 876, EP-B 13 941, DE-A 2 622 973, DE-A 2 401 149 und EP-B 9757 bekannten Poly-α-olefinkautschuk/Maleinsäureanhydrid-Addukte, die gemäß DE-A 3 335 706 bekannten Umsetzungsprodukte aus Ethylen-Copolymeren mit Maleinsäureanhydrid und Dialkylestern der Malein- bzw. Fumarsäure, die gemäß FR-PS 1 568 637 mit ungesättigten Säuren gepfropften Polyolefinkautschuke (GB-PS 998 439), sowie die z.B. in der DE-A 2 622 973 beschriebenen Maleinsäure-gepfropften EPDM-Kautschuke.

Vorteilhaft geeignet sind insbesonders Pfropfpolymerisate, die durch Aufpropfen von Styrolmonomeren und Acrylnitril auf ein Kautschukpolymerisat, dessen Glastemperatur unter 0°C, vorzugsweise unter -20°C, liegt, entstehen; Kautschukpolymerisate sind dann beispielsweise Polybutadien, Butadien-Acrylester-Copolymere z.B. auf der Basis von Acrylsäurebutyl- und/oder -ethylhexylester, Polyacrylsäurealkylester, insbesondere solche mit 1 bis 8 Kohlenstoffatomen im Alkylrest, Copolymere aus Butadien, Acrylsäurealkylestern und Vinylalkylethern, Copolymere aus Ethylen, Propylen und einer Dienkomponente. Die Herstellung derartiger kautschukmodifizierter Copolymerisate ist bekannt (z.B. aus JA 48 850 oder US-PS 4 217 424.

Als Komponenten C) sind auch die gemäß DE-A 2 906 222 bekannten Pfropfpolymerisate aus Styrol und Acrylnitril auf Polybutadien oder Copolymerisaten aus Butadien und α,ß-ungesättigten Monomeren, wie beispielsweise Styrol, Acrylnitril, niedere Alkylester der Acryl- oder Methacrylsäure, sowie die bekannten bepfropften Acrylatkautschuke geeignet.

Vorteilhaft geeignet sind auch die z.B. in der DE-A 3 200 070 beschriebenen mehrphasigen Polymere aus einem stark vernetzten Dienkautschuk als Kern, mit einer ersten Hülle aus vernetztem Acrylatkautschuk (Kautschuk mit Kern/Mantelstruktur) und einer zweiten Hülle aus einem Polymerisat oder Copolymerisat aus harzbildenden Monomeren aus der Reihe Styrol, Acrylnitril, Methacrylnitril, Methacrylsäureester oder Mischungen daraus.

Geeignet sind auch die in EP-A 0 134 937 beschriebenen gepfropften, partiell vernetzten Dien- und/oder Acrylatkautschuke, sowie die gemäß DE-A 2 758 615 aus einem vernetzten Kautschuk als

5

Pfropfgrundlage hergestellten Pfropfprodukte. Bevorzugt werden dabei Kautschuke auf Basis Polybutadien und/oder Polyisopren, die bis zu 40, vorzugsweise bis 10 Gew.-% Styrol und/oder Acrylnitril und/oder Ester der Acrylsäure als Comonomer enthalten können. Mögliche Pfropfmonomere können sein: Acrylnitril, Methacrylnitril, aliphatische Ester und Amide der Acrylsäure und Methacrylsäure mit bis zu 22 C-Atomen.

Zu besonders hochwertigen erfindungsgemäßen Formmassen führen als Komponente (C) Pfropfpolymerisate mit teilchenförmiger Struktur und partieller Vernetzung. Vorteilhafte Teilchengrößen ($d_{50}$-Werte) liegen im Bereich von 0,05 bis 2 $\mu$m, besonders 0,08 bis 0,6 $\mu$m, insbesondere von 0,15 bis 0,5 $\mu$m. Die zur Herstellung solcher Pfropfpolymerisate eingesetzten Kautschuke sind ebenfalls teilchenförmig, wenigstens teilvernetzt und besitzen Gelgehalte (als Maß für den Vernetzungsgrad) von größer 30 Gew.-%, vorzugsweise größer 70 Gew.-%. Die Gelgehalte werden nach M. Hoffmann et al, Polymeranalytik I und II, Georg Thieme Verlag, Stuttgart (1977) bestimmt. Solche Pfropfpolymerisate enthalten Kautschukgehalte im Bereich größer 20 Gew.-%, insbesondere größer 45 Gew.-%, besonders bevorzugt größer 65 Gew.-%, und enthalten Kautschuke aus der Reihe der Dienkautschuke (Butadien, Isopren) sowie deren Copolymeren mit Styrol, Acrylnitril, Alkyl(meth)acrylat, Vinylether, der Alkylacrylatkautschuke ($C_1$-$C_8$-Alkyl-Acrylat) sowie deren Copolymeren mit Dienmonomeren, Styrol, Acrylnitril, Alkylmethacrylat, Vinylester, Vinylether. Alkylacrylatkautschuke enthalten üblicherweise geringe Mengen polyfunktioneller Comonomerer, die eine Vernetzung der Acrylatkautschuke bewirken, beispielsweise Divinylbenzol, Diol-bis-(Meth)acrylatester, Bis-Acrylamide, Acrylamid-Methylolderivate, Trivinylbenzol, Triallylcyanurat, Triallylisocyanurat. Solche Kautschukgrundlagen sind bekannt. Besonders geeignete Acrylat-Kautschukgrundlagen besitzen eine Kern-Mantel-Struktur, insbesondere einen Dienkautschukkern mit einem Kernanteil von 0,5 bis 10, vorzugsweise 2 bis 4 Gew.-%.

Die bevorzugt geeigneten, auf die Kautschukgrundlagen aufgepfropften Monomere sind Alkylmethacrylat, Styrol, Acrylnitril, Alkylacrylat, Acrylamide, Acrylsäure, Methacrylsäure, insbesondere Methylmethacrylat sowie Kombinationen aus Methylmethacrylat und Alkylacrylaten, gegebenenfalls in kleinen 0,2 bis 5 Gew.-% Anteilen ungesättigte Carbonsäuren wie (Meth)acrylsäure enthaltend.

Besonders gut geeignete, bevorzugt eingesetzte Pfropfpolymerisate vom Typ C) enthalten Kautschukgehalte größer 45 Gew.-%, enthalten Kautschuk mit Gelgehalten größer 70 Gew.-%, besitzen Teilchengrößen von 0,15 bis 0,5 $\mu$m, enthalten Polybutadienkautschuk, Polybutylacrylatkautschuk sowie entsprechende Kern/Mantel-Kautschuke (nach DE-A 3 200 070) und besitzen als Pfropfmonomere Methylmethacrylat, insbesondere in Kombination mit Alkylacrylaten, insbesondere Mischungen aus n-Alkylacrylat und tert.-Alkylacrylat. Diese Pfropfpolymerisate lassen sich durchweg durch Emulsionspfropfpolymerisation nach bekannten Methoden herstellen.

Die erfindungsgemäßen Formmassen können übliche Additive, wie Gleit- und Entformungsmittel, Nukleierungsmittel, Stabilisatoren, Füll- und Verstärkungsstoffe, Flammschutzmittel, Farbstoffe sowie Thermostabilisatoren, Antioxidantien und/oder Lichtschutzmittel enthalten.

Die Herstellung der Formmassen kann durch Vermischen der Komponenten in üblichen Mischaggregaten, wie Walzen, Knetern, Ein- oder Mehrwellenextrudern, erfolgen.

Wenn auch in den meisten Fällen sämtliche Komponenten zweckmäßigerweise in einem Schritt gemischt werden, kann es manchmal auch empfehlenswert sein, zuerst eine oder gar zwei Komponenten wegzulassen und erst zu einem späteren Zeitpunkt zuzumischen. So können die erfindungsgemäßen Formmassen auf den genannten Mischaggregaten hergestellt werden, indem die Komponenten A), B) in Anwesenheit der Komponente C), falls vorhanden, gemeinsam aufgeschmolzen und homogenisiert werden, oder indem das Pfropfpolymerisat C) in die Schmelze des Polyamids A) oder des Gemischs aus A) und B) eingearbeitet wird.

Die Temperatur bei der Herstellung der Mischungen sollte mindestens 10°C und zweckmäßig höchstens 80°C oberhalb des Schmelzpunktes, bzw. Erweichungspunktes bei nichtkristallinen Materialien, der Komponente mit der höchsten Schmelz- bzw. Erweichungstemperatur liegen. Entsprechend dem Eigenschaftsbild eignen sich die erfindungsgemäßen Formmassen überall im Spritzguß- und Extrusionssektor dort, wo die beschriebenen Eigenschaften gefordert werden, wie z.B. im Kfz-Bereich für Stoßfänger, Karosserieteile, Innenraumverkleidungen oder als Gehäusematerial für Elektrogeräte.

Beispiele

Verwendete Komponenten:

A. Polyamid

A.1 Polyamid 6 mit einer relativen Viskosität (gemessen an einer 1 gew.-%igen Lösung in m-Kresol bei 25° C) von 3,0.

A.2 Polyamid 6 mit einer relativen Viskosität (gemessen an einer 1 gew.-%igen Lösung in m-Kresol bei 25° C) von 3,5.

B. II Herstellung der Komponente B

Beispiele B-1 bis B-4

In einem 10-l-Glaskolben wurde eine Emulgatorlösung (siehe Tabelle 1) als Vorlage 1 vorgelegt und auf 75° C aufgeheizt. Als Vorlage 2 wurde eine Monomermischung aus α-Methylstyrol, Acrylnitril und Comonomer (siehe Tabelle 1) zugegeben und 10 Min. emulgiert. Bei 75° C wurde eine Lösung von 0,35 Teilen Kaliumpersulfat in 20 Teilen Wasser zugegeben und 1 Stunde gerührt. Anschließend wurden die Monomerzuläufe 1 und 2 in einem Zeitraum in 5 Stunden gleichmäßig zudosiert. Nach beendeter Zugabe wurde 2 Stunden nachgerührt, anschließend der Polymerlatex analysiert und aufgearbeitet.

Hierzu wurde der Polyermisatlatex durch Zugabe einer 2 %igen wäßrigen Magnesiumsulfatlösung bei 90° C koaguliert. Das Koagulat wurde gewaschen und auf einen Restanteil an flüchtigen Bestandteilen von kleiner 2.000 ppm getrocknet.

Tabelle 1

| Beispiel | | B 1 | B 2 | B 3 | B 4 |
|---|---|---|---|---|---|
| Vorlage 1 | | | | | |
| entionisiertes Wasser | (Teile) | 130 | 130 | 130 | 130 |
| Emulgator | (Teile) | 2,5 | 2,5 | 1,0 | 2,5 |
| Vorlage 2 | | | | | |
| AMS | (Teile) | 30 | 30 | 25 | 25 |
| ACN | (Teile) | 4 | 4 | 4 | 5 |
| Acrylamid | (Teile) | 1 | - | 1 | 0 |
| Methacrylamid | (Teile) | - | 1 | - | - |
| Monomerzulauf 1 | | | | | |
| AMS | (Teile) | 50 | 47 | 50 | 50 |
| ACN | (Teile) | 13 | 17 | 18 | 18 |
| t-DDM* | (Teile) | - | - | 0,1 | - |
| Monomerzulauf 2 | | | | | |
| Acrylamid | (Teile) | 2 | - | - | - |
| Methacrylamid | (Teile) | - | 1 | 2 | - |
| entionisiertes Wasser | (Teile) | 20 | 20 | 20 | 20 |

\* t-DDM ist tert.-Dodecylmercaptan

Beispiele für erfindungsgemäß geeignete Kautschukpolymerisate (Komponente C)

Beispiel C1

Zur Herstellung des Kautschukpolymerisats (C) werden nach dem Verfahren der Emulsionspolymerisation gemäß den Angaben in der DE-A 3 105 364 14,4 Gew.-Teile Styrol und 5,6 Gew.-Teile Acrylnitril auf 80 Gew.-Teile eines grobteiligen Kautschuks mit einem mittleren Teilchendurchmesser der in Latexform vorliegenden Butadienpfropfgrundlage von 0,4 µm und einem Gelgehalt von 86 Gew.-% aufgepfropft (Gelbestimmung nach M. Hoffmann et al, Polymeranalytik I und II, Georg Thieme Verlag, Stuttgart (1977).

Beispiel C2

Zur Herstellung des Kautschukpolymerisats (C) werden nach dem Verfahren der Emulsionspolymerisation gemäß den Angaben in der DE-A 3 105 364 und DE-A 3 019 233 18 Gew.-Teile Methylmethacrylat und 2 Gew.-Teile n-Butylacrylat auf 80 Gew.-Teile eines grobteiligen Kautschuks mit einem mittleren Teilchendurchmesser der in Latexform vorliegenden Butadienpfropfgrundlage von 0,4 µm nach Beispiel C1) aufgepfropft.

| Zusammensetzung der Formmassen: | | | |
|---|---|---|---|
| Beispiel | 1 | 2 | 3 |
| Komponente | | | |
| A (Gew.-%) | 70 | 70 | 70 |
| B1 (Gew.-%) | 30 | - | - |
| B2 (Gew.-%) | - | 30 | - |
| B4 (Gew.-%) | - | - | 30 |

Auf einem kontinuierlich arbeitendem Doppelwellenextruder wurden die Komponenten bei Massetemperaturen von 275 °C aufgeschmolzen, homogenisiert, abgekühlt und granuliert. Von den Formmassen wurden auf einer üblichen Spritzgußmaschine 80 x 10 x 4 mm³ Prüfstäbe hergestellt. Geprüft wurde der Biege-E-Modul (DIN 53457), die Schlagzähigkeit bzw. Kerbschlagzähigkeit nach ISO 180 und die VICAT Erweichungstemperatur VST/B (DIN 53460).

| Beispiel | 1 | 2. | 3 |
|---|---|---|---|
| Biege-E-Mod. [MPa] | 3074 | 2933 | 2849 |
| $a_n$ [KJ/m²] | | | |
| RT | 18,8 | 19,1 | 21,5 |
| -20 °C | 22,1 | 21,9 | 27,8 |
| Vicat B [ °C] | 162 | 161 | 156 |
| RT = Raumtemperatur | | | |

| Zusammensetzung der Formmassen: | | | | | | |
|---|---|---|---|---|---|---|
| Beispiel | 4 | 5 | 6 | 7 | 8 | 9 |
| Komponente | | | | | | |
| A 2 (Gew.-%) | 50 | 50 | 50 | 50 | 50 | 50 |
| B 1 | 20 | - | - | - | - | - |
| B 3 | - | 20 | - | - | 20 | - |
| B 4 | - | - | 20 | - | - | 20 |
| C 1 | - | - | - | 30 | 30 | 30 |
| C 2 | 30 | 30 | 30 | - | - | - |
| Beispiel | 4 | 5 | 6 | 7 | 8 | 9 |
| Biege-E-Modul (MPa) | 1710 | 1723 | 1680 | 1921 | 1950 | 1890 |
| $a_k$ (kJ/m²] RT | 70,5 | 84,6 | 8x60,2 2x42,0 | 9,7 | 8,5 | 7,7 |
| Zäh/Spröd-Übergang [° C] | RT/ + 10 | + 10/0 | RT | >RT | >RT | >RT |
| Vicat B [° C] | 125 | 124 | 120 | 124 | 125 | 119 |

Die Einstellungen, die die Komponente B 4 enthalten, weisen leichte Delaminierungen auf.


**Ansprüche**

1. Thermoplastische Formmassen, enthaltend

A) mindestens 2 Gew.-% eines thermoplastischen, teilkristallinen und/oder amorphen Polyamids,

B) 10 bis 98 Gew.-% eines durch Emulsionspolymerisation hergestellten thermoplastischen Harzcopolymeren aus

B.1) mindestens 49 Gew.-% α-Methylstyrol,

B.2) 10 bis 50 Gew.-% Acrylnitril und/oder Methacrylnitril,

B.3) 1 bis 50 Gew.-% Acrylamid

C) gegebenenfalls einem, die Schlagzähigkeit der Formmassen erhöhenden Kautschukpolymerisats in Mengen bis 35 Gew.-%, in der Mischung (A + B + C)

und gegebenenfalls übliche Zusätze in üblichen Mengen.

2. Thermoplastische Formmassen nach Anspruch 1, dadurch gekennzeichnet, daß 5 bis 90 Gew.-% Polyamide A) (bezogen auf A + B) eingesetzt werden.

3. Thermoplastische Formmassen nach Anspruch 1 und 2, dadurch gekennzeichnet, daß 10 bis 95 Gew.-% eines thermoplastischen Harzcopolymeren B) (bezogen auf A + B) eingesetzt werden.

4. Thermoplastische Formmassen nach mindestens einem der Ansprüche 1 bis 3, dadurch gekennzeichnet, daß B) aus

B.1) 62 bis 85 Gew.-% α-Methylstyrol,

B.2) 14 bis 37 Gew.-% Acrylnitril und/oder Methacrylnitril und

B.3) 1 bis 20 Gew.-% Acrylamid

besteht.

5. Thermoplastische Formmassen nach mindestens einem der Ansprüche 1 bis 4, dadurch gekennzeichnet, daß B) aus

B.1) 69 bis 85 Gew.-% α-Methylstyrol,

B.2) 14 bis 30 Gew.-% Acrylnitril und/oder Methacrylnitril

B.3) 1 bis 10 Gew.-% Acrylamid

besteht.

6. Thermoplastische Formmassen nach mindestens einem der Ansprüche 1 bis 5, dadurch gekennzeichnet, daß das Kautschukpolymerisat C) in Mengen von 10 bis 30 Gew.-%, bezogen auf die Mischung (A + B + C), eingesetzt wird.

7. Thermoplastische Formmassen nach mindestens einem der Ansprüche 1 bis 6, dadurch gekennzeichnet, daß solche thermoplastischen Harzkomponenten B), die nach dem Verfahren der deutschen Patentanmeldung P 38 06 074.4 hergestellt werden, eingesetzt werden.

8. Verfahren zur Herstellung von thermoplastischen Formmassen nach mindestens einem der Ansprüche 1 bis 7, dadurch gekennzeichnet, daß

A) mindestens 2 Gew.-% eines thermoplastischen, semikristallinen oder amorphen Polyamids,

B) 10 bis 98 Gew.-% eines durch Emulsionspolymerisation hergestellten thermoplastischen Harzcopolymeren aus

B.1) mindestens 49 Gew.-% α-Methylstyrol,

B.2) 10 bis 50 Gew.-% Acrylnitril und/oder Methacrylnitril

B.3) 1 bis 50 Gew.-% Acrylamid,

C) gegebenenfalls einem, die Schlagzähigkeit der Formmassen erhöhenden Kautschukpolymerisats in Mengen bis 35 Gew.-% in der Mischung (A + B + C)

und gegebenenfalls üblichen Zusätzen in üblichen Mengen

in üblicher Form kompoundiert und/oder vermischt werden.

9. Verwendung der thermoplastischen Formmassen nach mindestens einem der Ansprüche 1 bis 8 zur Herstellung von Formkörpern durch thermoplastische Verarbeitung.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,A | EP-A-0 080 720  (BORG-WARNER CHEMICALS INC.) <br> * Ansprüche * <br> ----- | 1 | C 08 L  77/00 <br> C 08 L  25/16 |

RECHERCHIERTE SACHGEBIETE (Int. Cl.5)

C 08 L

Der vorliegende Recherchenbericht wurde für alle Patentansprüche erstellt

| Recherchenort | Abschlußdatum der Recherche | Prüfer |
|---|---|---|
| DEN HAAG | 27-10-1989 | DE LOS ARCOS Y VELAZQUEZ |